# EUROPÄISCHE PATENTSCHRIFT

(11) **EP 0 989 349 B1**
(45) Veröffentlichungstag und Bekanntmachung des Hinweises auf die Patenterteilung: **16.08.2006**
(21) Anmeldenummer: 98810937.7
(22) Anmeldetag: 21.09.1998
(51) Int. Cl.: F16L 21/00, F16L 55/172

(54) **Rohrkupplung**
Pipe coupling
Raccord de tuyaux

(43) Veröffentlichungstag der Anmeldung: 29.03.2000
(73) Patentinhaber: Straub Werke AG, 7323 Wangs (CH)
(72) Erfinder: Häberli, Hans-Peter, 8882 Unterterzen (CH)
(74) Vertreter: Rosenich, Paul

(56) Entgegenhaltungen:
- EP-A- 0 550 813
- FR-A- 1 011 740
- GB-A- 2 103 272

## Beschreibung

Die vorliegende Erfindung betrifft eine Rohrkupplung oder Rohrschelle zum Verbinden oder Reparieren von Rohren gemäss dem Oberbegriff von Anspruch 1.

Dokument DE 37 29 372 offenbart eine Rohrkupplung gemäß dem Oberbegriff des Anspruchs 1. Es zeigt eine Rohrkupplung, bei der ein Verschlussbolzen Mittel zur Drehmitnahme für die Mehrkant mutter aufweist.

Die US 3,861,723 offenbart eine Rohrkupplung mit einem in Langsrichtung gespaltenen Gehäuse, welches eine Dichtung umgibt. Das Gehäuse besteht aus einem biegsamen Metallband, dessen Enden als Laschen ausgebildet sind. Die Laschen dienen der Aufnahme einer Spanneinrichtung, mit Hilfe welcher die Laschen gegeneinander bewegt werden können. Zum Verbinden zweier Rohre werden deren Rohrenden soweit in die Rohrkupplung eingeschoben, bis diese aneinander stossen. Danach werden die Laschen mit der Spanneinrichtung zusammengezogen, wodurch sich die Dichtung fest an die Rohre legt und die Stossfuge zwischen den Rohrenden abdichtet.

Die erwähnte Spanneinrichtung besteht im wesentlichen aus zwei in die Laschen passenden Spannblöcken und einer herkömmlichen Schraube mit Schraubenmutter zum Verbinden und Zusammenziehen der Spannblöcke. Die Spannblöcke sind aus je einem zylindrischen Metallstab hergestellt, welcher jeweils eine quer zur Längsachse verlaufende Durchgangsöffnung zur Aufnahme des Schraubenschafts besitzt. Die Spannblöcke besitzen an einer Seite eine Abflachung, an welcher der Schraubenkopf oder die Mutter flach anliegen kann.

Derjenige Spannblock, auf dem sich der Schraubenmehrkantkopf abstützt, hat in der Abflachung eine Längsnut eingearbeitet, deren Breite der Schlüsselweite des Schraubenmehrkantkopfes entspricht, sodass der Schraubenkopf etwa bündig mit der Abflachung im Spannblock aufgenommen wird. Auf diese Weise ist eine Drehmitnahme verwirklicht, die verhindert, dass sich der Schraubenkopf beim Festziehen der Schraubenmutter mitdrehen kann.

Damit der schraubenkopfseitige Spannblock und die diesen durchsetzende Schraube nicht aus der Lasche rutschen können, ist in der schraubenkopfseitigen Lasche lediglich eine Durchtrittsöffnung für den Schraubenschaft vorgesehen. Bei der Herstellung der Kupplung wird der Schraubenschaft zuerst durch den Spannblock und dann durch die Durchttrittsöffnung in der Lasche geführt. Danach wird das die Lasche bildende Metallbandende umgelegt und mit dem Metallband verschweisst. Die schraubenmutterseitige Lasche hingegen besitzt zwei fluchtende Durchtrittsöffnungen, durch welche sich der ein Schraubengewinde aufweisende Schraubenschaft erstreckt. Da die äussere Durchtrittsöffnung kleiner ist als die Schlüsselweite der Mutter, ist zwischen dem mutterseitigen Spannblock und der Schraubenmutter eine Distanzhülse vorgesehen. Dadurch kommt die Mutter ausserhalb der Lasche zu liegen und kann von einem herkömmlichen Schraubenschlüssel umfasst werden. Die Verwendung der Distanzhülse bringt allerdings den Nachteil mit sich, dass der Schraubenschaft länger als unbedingt nötig dimensioniert werden muss und die Kupplung insgesamt mehr Platz beansprucht.

Nachteilig an der beschriebenen Rohrkupplung ist auch, dass die Herstellungskosten der aus einem Vollmaterial gearbeiteten Spannblöcke sehr hoch sind, da zur Herstellung der abgeflachten Oberfläche und der Längsnut entweder spanabhebende Bearbeitung oder aufwendige Umformung erforderlich ist. Ein weiterer Nachteil ist, dass die bekannte Rohrkupplung wegen der unlösbaren Verbindung der Schraube mit der Lasche sich weniger als Reparaturschelle eignet, da das mit der Schraube unlösbar verbundene Metallband bei beengten Platzverhältnissen nicht um ein undichtes Rohr gelegt werden kann. Ein weiterer Nachteil der bekannten Rohrkupplung ist, dass beim Spannen der Rohrkupplung unerwünschte Biegekräfte auf den Schraubenschaft wirken, die im Zeitablauf zu einem Ermüdungsbruch des Schraubenschafts führen können.

In der EP-A-0 550 813 ist eine Rohrkupplung mit einem in Längsrichtung gespaltenen Gehäuse offenbart. Diese Rohrkupplung ist ausschliesslich zum Verbinden zweier aneinanderstossender Rohre gedacht, da der Gehäusespalt sich nicht soweit öffnen lässt, dass das Gehäuse um ein Rohr gelegt werden könnte. Die in der EP-A-0 550 813 offenbarte Rohrkupplung besitzt seitlich des Gehäusespaltes je eine Lasche, die der Aufnahme eines im Querschnitt im wesentlichen U-förmig ausgebildeten Spannorgans dient. Die Spannorgane greifen mit ihren Schenkelenden an einem etwa radial verlaufenden, ebenen Wandabschnitt der jeweiligen Spannlaschen an. Die flachen Wandabschnitte der Laschen liegen sich gegenüber und besitzen je eine Durchgangsöffnung zur Aufnahme des Schaftes einer Spannschraube. Der Schaft der Spannschraube durchsetzt die Durchtrittsöffnung der Spannorgane mit Spiel, und die U-förmigen Spannorgane sind so in den Laschen angeordnet, dass deren Schenkel gegeneinander gerichtet sind. Dadurch können sich sowohl die Mutter als auch der Schraubenkopf beim Zusammenziehen der Spannorgane auf den Wölbungen der Spannorgane abwälzen. Dies hat den Vorteil, dass das Auftreten von nicht erwünschten Biegekraft-Einwirkungen auf den Schraubenschaft vermieden werden können.

Als Spannschraube findet eine Schraube mit einem Innensechskant-Schraubenkopf Verwendung. Im übrigen entspricht die Breite der in der Lasche vorgesehenen Durchgangsöffnung etwa der Schlüsselweite der eingesetzten Schraubenmutter, sodass dieselbe durch die Laschen-Durchtrittsöffnung gegen Verdrehung gesichert ist. Die Rohrkupplung der EP-A-0 550 813 hat den Vorteil, dass der Gehäusespalt fast vollständig geschlossen werden kann. Nachteilig hingegen ist, dass sowohl der Schraubenkopf als auch die Schraubenmutter nur entlang einer Auflagelinie auf der Wölbung der Spannorgane aufliegen.

Die GB-A-2 103 272 offenbart eine Rohrschelle mit einem zylindrischen, einen Längsspalt aufweisenden Gehäuse. Die dem Längsspalt benachbarten Enden sind als Laschen für den Kraftangriff je eines Verschlussbolzens ausgebildet. In den beiden Laschen ist jeweils ein erster bzw. ein zweiter Verschlussbolzen angeordnet, welche parallel zur Längsachse des Gehäuses gerichtet sind und sich an den Laschen abstützen. Die Verschlussbolzen sind Rohre mit zwei Durchtrittsöffnungen für die Aufnahme von zwei Spannschrauben. Die Spannschrauben besitzen einen T-förmigen Kopf, welcher sich von innen gegen die Innenwandung des ersten Verschlussbolzens abstützt. Die mit den Spannschrauben zusammenwirkenden Mehrkantmuttern stützen sich von aussen auf der Aussenrundung am zweiten rohrförmigen Verschlussbolzen ab. Die Rohrschelle wird dadurch angezogen, dass die Mehrkantmutter mit einem Schlüssel gegriffen und relativ zu Schraube und Rohrschelle verdreht wird. Der Schraubenkopf ist dabei bezüglich der Drehrichtung um den Schraubenschaft drehfest im Verschlussbolzen angeordnet. Nachteilig an dieser Rohrschelle ist, dass die Spannschraube eine Spezialanfertigung ist, die relativ teuer in der Herstellung ist. Ein weiterer Nachteil ist, dass die Mehrkantmutter die Laschen überragt und nur entlang einer Auflagelinie auf der Wölbung des Verschlussbolzens aufliegt.

Obwohl Reparaturschellen und Rohrkupplungen in einigen Belangen ähnlich sind, gibt es doch auch gewichtige Unterschiede, die ihre Ursache in deren unterschiedlicher Verwendung und Funktion haben. Sogenannte Reparaturschellen, beispielsweise, werden - im Gegensatz zu einer Rohrkupplung - um ein defektes Rohr herumgelegt. Dies erfordert, dass das gespaltene Gehäuse der Reparaturschelle bis auf den Durchmesser des defekten Rohres geöffnet werden können muss. Auch muss dazu die Spanneinrichtung vollständig gelöst werden. Dies kann den Nachteil mit sich bringen, dass die verwendeten Schrauben oder Muttern aus den Halterungen fallen und verlorengehen. Weiter ist es wünschenswert, dass sich die Spanneinrichtung der Reparaturschelle auch unter schwierigsten Platzverhältnissen gut schliessen und bedienen lässt. Ausserdem sollte eine Reparaturschelle möglichst wenig Platz beanspruchen.

Es ist daher Aufgabe der vorliegenden Erfindung, eine Rohrkupplung oder Reparaturschelle zum Verbinden oder Reparieren von Rohren bereitzustellen, die die Nachteile der eingangs erwähnten bekannten Rohrkupplungen und Rohrschellen weitgehend vermeidet. Insbesondere, soll die Rohrkupplung oder Reparaturschelle kostengünstig in der Herstellung sein. Weiter soll die Rohrkupplung oder Reparaturschelle auch unter ungünstigen Platzverhältnissen eingesetzt und gespannt werden können. Auch soll die Rohrkupplung möglichst wenig Platz beanspruchen.

Erfindungsgemäss wird dies dadurch realisiert, dass die Verschlussbolzen im Querschnitt im wesentlichen U-förmig ausgebildet sind, wobei die Schenkel wenigstens im Bereich der Durchtrittsöffnungen für die Spannschrauben parallel zweinander verlaufen und einen der Schlüsselweite der Mehrkant mutter entsprechenden Abstand aufweisen.

Die erfindungsgemässe Rohrkupplung, die insbesondere als Reparaturschelle Verwendung findet, kann durch die Ausbildung des Verschlussbolzens als Hohlprofil äusserst kostengünstig hergestellt werden, da dabei auch erhebliche Materialeinsparungen möglich sind. Unter einem Hohlprofil wird ein längliches Profilteil verstanden, welches im Querschnitt nach wenigstens drei Seiten hin geschlossen ist. Ein weiterer Vorteil ist, dass die Drehmitnahme für die Mehrkantmutter in einem Hohlprofil ohne aufwendige Bearbeitungsschritte realisiert werden kann. Vorteilhaft ist auch, dass durch die relative Beweglichkeit von Verschlussbolzen und Lasche sich beim Anziehen der Rohrkupplung die Verschlussbolzen einpendeln und sich somit keine auf den Schraubenschaft wirkende Biegekräfte aufbauen können.

Was die Anordnung der Laschen und der Spannschrauben anbelangt, so sind verschiedene Ausführungsformen denkbar. Grundsätzlich kann lediglich eine zentrale Lasche vorgesehen sein. Dabei können zwei Spannschrauben zu beiden Seiten der Lasche angeordnet sein, wobei die Lasche vorzugsweise kürzer als das Gehäuse ausgebildet ist. Diese Anordnung hat den Vorteil, dass keine speziellen Durchtrittsöffnungen für die Schraubenschäfte nötig sind. Denkbar ist auch, dass nur eine Spannschraube zum Einsatz kommt, welche dann in der Mitte der Lasche angeordnet ist. In diesem Fall besitzt die Lasche eine längliche Durchtrittsöffnung für den Schaft der Spannschraube in Form eines Langloches oder eines Schlitzes. Schlitze haben den Vorteil, dass diese direkt aus einem Metallblech ausgestanzt werden können. Vorzugsweise weist die Rohrkupplung zwei Spannschrauben auf, die sich durch längliche, die freie Verdrehbarkeit der Verschlussbolzen gegenüber den Laschen gewährleistende Ausnehmungen in den Laschen erstrecken.

Obwohl die Laschen grundsätzlich als in einem Winkel von der zylindrischen Gehäusewand abstehende, den Kraftangriff der Verschlussbolzen ermöglichende Stege oder Rippen mit einer zu den Verschlussbolzen komplementären Form ausgebildet sein können, sind die Laschen vorteilhaft im Querschnitt geschlossene Schlaufen. Diese können kostengünstig hergestellt werden, indem ein länglicher, den Gehäusemantel bildenden Mettallstreifen aus einem Stahlblech ausgestanzt oder geschnitten wird, die Enden des Metallstreifens zur Bildung einer Aufnahmeöffnung für die Verschlussbolzen umgebogen and sodann am Metallstreifen, z.B. durch Punktschweissen, befestigt werden.

Zweckmässigerweise sind die beiden Verschlussbolzen im wesentlichen gleich ausgebildet. Dies ergibt den Vorteil, dass nur eine Art Verschlussbolzen wirtschaftlich in doppelter Stückzahl hergestellt werden können und die Verwendung einer herkömmlichen Schraube mit einem Innensechskant-Schraubenkopf als Spannschraube möglich ist.

Zweckmässigerweise sind die Schenkelenden der Verschlussbolzen zur Fixierung der Mehrkantmutter in axialer Richtung der Spannschrauben nach einwärts umgebogen oder abgeknickt. Durch diese Gestaltung des Profils ist eine kostengünstige Halterung und Drehmitnahme für die Mehrkantmutter verwirklicht.

Gemäss einer besonders bevorzugten Ausführungsform sind die Verschlussbolzen im Querschnitt rund oder ungefähr C-förmig ausgebildet. Ein rundes oder C-förmiges Metallprofil eignet sich besonders gut zur Herstellung der Verschlussbolzen. Da der lichte Abstand der Schenkelenden kleiner als die Schlüsselweite der Mehrkantmutter ist, ist die Schraubenmutter in Richtung quer zur Längsachse des Verschlussbolzens resp. in axialer Richtung der Spannschrauben fixiert.

Zweckmässig sind die Verschlussbolzen wenigstens im Bereich der Durchtrittsöffnungen für die Spannschrauben mit Einprägungen versehen, welche der Schlüsselweite der Mutter entsprechende, parallele Schlüsselflächen bilden. Um die Mehrkantmutter in Längsrichtung des Verschlussbolzens zu sichern, können Haltemittel in Form von Wulsten oder Nocken vorgesehen sein. Vorteilhaft sind die Wulste oder Nocken in einem solchen Abstand zueinander angeordnet, dass die Mehrkantmutter mit Spiel gehalten ist. Dies erleichtert das Ansetzen des Schraubenschafts.

Zweckmässigerweise besitzt der Verschlussbolzen wenigstens im Bereich der Durchtrittsöffnungen für den Schraubenschaft der Spannschrauben eine im wesentlichen senkrecht zu Achse der Spannschrauben verlaufende Abflachung zur Bildung einer ebenen Auflagefläche für den Schraubenkopf oder die Schraubenmutter. Besonders kostengünstig sind die Verschlussbolzen herstellbar, indem diese aus einem flachen Stahlblech, vorzugsweise aus Edelstahl, ausgestanzt und anschliessend zum fertigen Teil umgeformt werden.

Zur Abdichtung eines Lecks oder eines Rohrstosses ist es vorteilhaft, dass das Gehäuse eine Dichtungsmanschette umschliesst, welche durch Zusammenziehen des Gehäuses im Durchmesser verengbar ist.

Vorzugsweise sind Mittel zur Sicherung der Verschlussbolzen gegen eine unerwünschte Verschiebung in Längsrichtung bei gleichzeitiger Verdrehbarkeit gegenüber den Laschen vorgesehen. Dies kann durch Einprägungen am Verschlussbolzen erreicht werden, welche mit Sicken an den Laschen zusammenwirken, oder durch eine aufgebogene Lasche am Gehäuse, welche ein herausrutschen des Verschlussbolzens aus der Laschenschlaufe verhindert. Sehr einfach kann eine solche Sicherung auch durch einen in die Stirnöffnung des Verschlussbolzens einsteckbaren Zapfen erreicht werden, welcher einen über die Kontur des Verschlussbolzens vorstehenden Kragen aufweist.

Zweckmässigerweise ist in den Laschen je eine Ausnehmung für den Schaft der Spannschraube vorgesehen, um eine freie Verdrehbarkeit der Verschlussbolzen gegenüber den Laschen zu gewährleisten.

Die Erfindung soll nachstehend, anhand der sie in Form von Ausführungsbeispielen wiedergebenden Zeichnungen näher erläutert werden. Es zeigen:
- Fig. 1: eine erfindungsgemässe Rohrkupplung, in perspektivischer Darstellung;
- Fig. 2: einen ausschnittweisen Querschnitt durch die in Fig. 1 dargestellte Rohrkupplung, entlang der Linie II - II;
- Fig. 3: einen Verschlussbolzen der in Fig. 1 und 2 dargestellten Rohrkupplung; in der Draufsicht;
- Fig. 4: eine Ansicht des in Fig. 3 gezeigten Verschlussbolzens, teilweise im Längsschnitt entlang der Linie IV - IV dargestellt;
- Fig. 5: eine Draufsicht des in Fig. 4 gezeigten Verschlussbolzens, in Richtung des Pfeiles V.
- Fig. 6: eine stimseitige Ansicht des in Fig. 4 gezeigten Verschlussbolzens in Richtung des Pfeiles VI,
- Fig. 7: einen Querschnitt durch den in Fig 4 gezeigten Verschlussbolzen, entlang der Linie VII - VII.

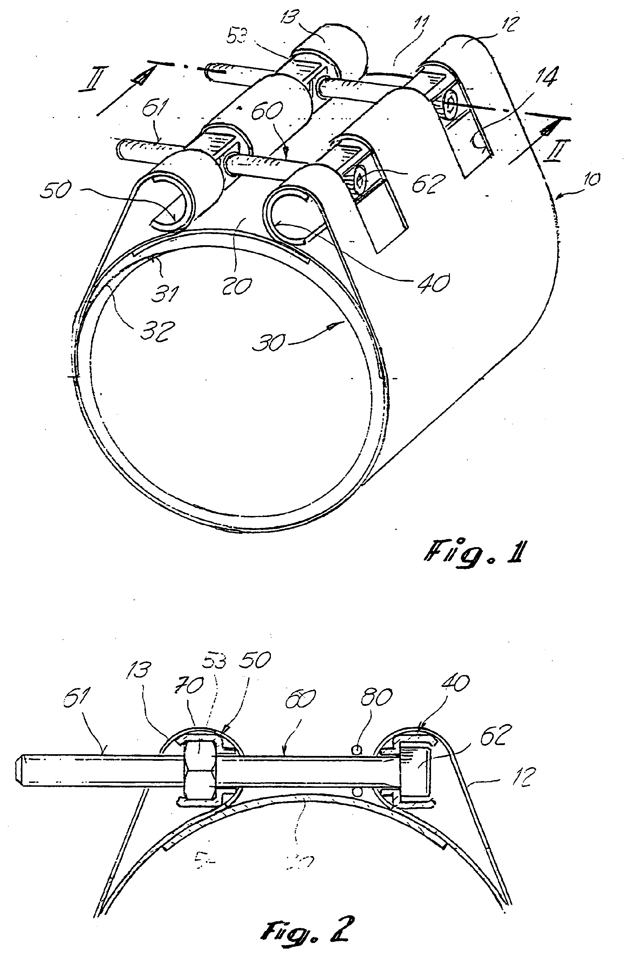

Die perspektivische Darstellung in Fig. 1 zeigt eine Rohrkupplung mit einem im wesentlichen zylindrischen Gehäuse 10, das einen Längsspalt 11 aufweist. Der Längsspalt 11 wird durch eine parallel zur Längsachse des Gehäuses 10 verlaufende, im Querschnitt entsprechend dem Gehäuseradius gewölbte Blecheinlage 20 überdeckt. Im Innern des Gehäuses 10 und der Blecheinlage 20 ist eine Dichtmanschette 30 aus einem Elastomer zur Abdichtung der nicht dargestellten, zu verbindenden oder zu reparierenden Rohre angeordnet. Die gezeigte Ausführung der Rohrkupplung ist zur Reparatur an bestehenden Rohrleitungen zu vorgesehen. Damit die Kupplung über das Rohr montiert werden kann, besitzt die Dichtmanschette 30 einen Längsschlitz 31, deren Ränder 32 sich überlappen.

An den dem Längsspalt 11 benachbarten Enden ist das Gehäuse 10 mit umgebogenen Laschen 12, 13 versehen. Die Laschen 12, 13 dienen dem Kraftangriff je eines Verschlussbolzens 40, 50 zum radialen Verengen des Gehäuses 10 durch Zusammenziehen des Längsspaltes 11.

Ein erster Verschlussbolzen 40 durchsetzt die Laschen 12 in Längsrichtung des Gehäuses 10. Ein zweiter Verschlussbolzen 50 durchsetzt die Laschen 13 und ist etwa parallel zum ersten Verschlussbolzen 40 angeordnet. Beide Verschlussbolzen 40, 50 weisen einen im wesentlichen U- bzw. C-förmigen Querschnitt auf, wobei die Wölbungen der beiden Verschlussbolzen 40, 50 gegeneinander gerichtet sind.

Wie insbesondere der Querschnitt in Fig. 2 zeigt, werden die Verschlussbolzen 40, 50 sowie auch die Spannlaschen 12, 13 vom Schaft 61 von Spannschrauben 60 quer durchsetzt. Der Kopf 62 der Spannschrauben 60 stützt sich in axialer Richtung am ersten Verschlussbolzen 40 ab. Auf den ein Schraubengewinde aufweisenden Schaft 61 der Spannschraube 60 ist eine Mehrkantmutter 70 aufgeschraubt. Die Mehrkantmutter 70 stützt sich in axialer Richtung am zweiten Verschlussbolzen 50 ab. Ein auf dem Schaft 61 angeordneter Sicherungsring 80, z.B. ein O-Ring, verhindert in der für das Überschieben der Rohrkupplung auf eine Rohrleitung geöffneten Stellung der Spanneinrichtung das Herausfallen der Spannschrauben 60.

Um eine freie Verdrehbarkeit der Verschlussbolzen 40,50 gegenüber den Laschen 12,13 zu gewährleisten, weisen die Laschen Ausnehmungen 14 auf, durch welche sich die Schraubenschäfte 61 erstrecken. Wird das Gehäuse 10 im Durchmesser verengt, so drehen sich die Schraubenschäfte 61 im gegenläufigen Sinn, sodass sich keine auf die Schraubenschäfte 61 einwirkenden Biegekräfte aufbauen können.

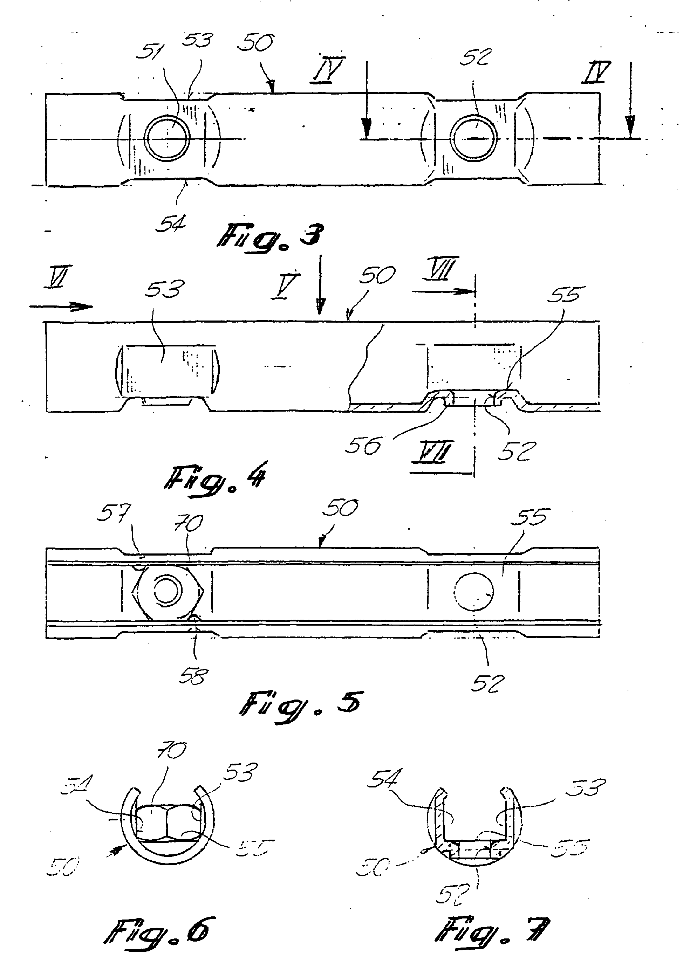

Die konstruktiven Details der Verschlussbolzen 40, 50 sind insbesondere aus den Fig. 3 bis 7 ersichtlich. Da beide Verschlussbolzen insbesondere aus wirtschaftlichen Gründen vorzugsweise gleich ausgebildet sind, sind zwecks Verdeutlichung lediglich die Bezugsziffem des zweiten, die Mehrkantmutter umgebenden Verschlussbolzens 50 eingetragen.

Der im Querschnitt im wesentlichen C-förmige Verschlussbolzen 50 weist zwei im Abstand voneinander angeordnete Durchtrittsöffnungen 51, 52 auf. Im Bereich der Durchtrittsöffnungen 51, 52 sind zwei parallel zueinander verlaufende, durch seitliche Einprägungen gebildetete Drehmitnahmeflächen 53, 54 für die Mehrkantmutter 70 angeordnet. Der Abstand zwischen den Drehmitnahmeflächen 53,54 auf der Innenseite des Verschlussbolzens 50 entspricht der Schlüsselweite der Mehrkantmutter 70. Auf der Innenseite der Durchtrittsöffnungen 51, 52 sind durch Abflachungen der Wölbung gebildete Auflageflächen 55 für die Mehrkantmutter 70, bzw. den Schraubenkopf 62 angeordnet. Die Durchtrittsöffnungen 51, 52 werden auf der äusseren Seite von einem Halsteil 56 umgeben. Dieses kann jedoch auch weggelassen werden.

Wie insbesondere die Fig. 6 und 7 zeigen, sind die Längsränder der Verschlussbolzen 50 nach innen gebogen, bzw. abgewinkelt, sodass die Mehrkantmutter 70 unverlierbar im Verschlussbolzen 50 gehaltert wird. Damit die Mehrkantmutter 70 auch in Längsrichtung des Verschlussbolzens 50 gegen Herausrutschen gesichert ist, sind im benachbarten Bereich der Mehrkantmutter 70 beispielsweise durch Nocken 57, 58 gebildete Anschläge vorgesehen.

Um in der geöffneten Stellung der Rohrkupplung ein axiales Herausrutschen des Verschlussbolzens 50 aus der Lasche 12, 13 zu verhindern, ist beispielsweise eine in eine Sicke am Verschlussbolzen 50 eingreifende Einprägung in der Lasche 12,13 vorgesehen.

### Bezugszeichenliste

- 10: Gehäuse

- 11: Längsspalt
- 12, 13: Lasche
- 14: Ausnehmung

- 20: Blecheinlage
- 30: Dichtmanschette

- 31: Längsschnitt
- 32: Ränder

- 40: erster Verschlussbolzen
- 50: zweiter Verschlussbolzen

- 51, 52: Durchtrittsöffnungen
- 53, 54: Drehmitnahmeflächen
- 55: Auflagefläche
- 56: Halsteil
- 57, 58: Nocken

- 60: Spannschraube

- 61: Schaft
- 62: Kopf

- 70: Mehrkantmutter
- 80: Sicherungsring

## Patentansprüche

1. Rohrkupplung oder Rohrschelle zum Verbinden oder Reparieren von Rohren mit einem im wesentlichen zylindrischen, einen Längsspalt (11) aufweisenden Gehäuse (10), dessen dem Längsspalt (11) benachbarten Ende als Laschen (12,13) für den Kraftangriff je eines Verschlussbolzens ausgebildet sind, einem ersten und einem zweiten Verschlussbolzen (40) resp. (50), welche sich an den Laschen (12,13) abstützend parallel zur Längsachse des Gehäuses (10) angeordnet sind, wobei die Verschlussbolzen (40,50) im Querschnitt wenigstens teilweise eine Wölbung aufweisen und die Wölbungen gegeneinander gerichtet sind, wenigstens einer die Verschlussbolzen (40,50) und die Laschen (12,13) durch Durchtrittsöffnungen (51,52) quer durchsetzenden Spannschraube (60) mit einer Mehrkantmutter (70) zum Zusammenziehen des Gehäuses in Umfangsrichtung, wobei sich die Spannschraube (60) mit ihrem Kopf (62) am ersten Verschlussbolzen (40) abstützt und die Mehrkantmutter (70) am zweiten Verschlussbolzen (50) abstützt und wenigstens der zweite Verschlussbolzen (40,50) als Hohlprofil ausgebildet ist, wobei wenigstens der zweite Verschlussbolzen (50) Mittel zur Drehmitnahme für die Mehrkantmutter (70) aufweist, **dadurch gekennzeichnet, dass** die Verschlussbolzen (40,50) im Querschnitt im wesentlichen U-förmig ausgebildet sind, wobei die Schenkel wenigstens im Bereich der Durchtrittsöffnungen (51,52) für die Spannschrauben (60) parallel zueinander verlaufen und einen der Schlüsselweite der Mehrkantmutter (70) entsprechenden Abstand aufweisen.

2. Rohrkupplung nach Anspruch 1, **dadurch gekennzeichnet, dass** die beiden Verschlussbolzen (40,50) im wesentlichen gleich ausgebildet sind.

3. Rohrkupplung nach Anspruch 1 oder 2, **dadurch gekennzeichnet, dass** die Schenkelenden der Verschlussbolzen (40,50) zur Fixierung der Mehrkantmutter (70) in axialer Richtung der Spannschrauben (60) nach einwärts umgebogen oder abgeknickt sind.

4. Rohrkupplung Anspruch 1 oder 2, **dadurch gekennzeichnet, dass** die Verschlussbolzen (40,50) im Querschnitt rund oder ungefähr C-förmig ausgebildet sind.

5. Rohrkupplung Anspruch 4, **dadurch gekennzeichnet, dass** die Verschlussbolzen (40,50) wenigstens im Bereich der Durchtrittsöffnungen (51,52) für die Spannschrauben (60) mit Einprägungen (53,54) versehen sind, welche der Schlüsselweite der Mutter (70) entsprechende, parallele Schlüsselflächen bilden.

6. Rohrkupplung nach einem der Ansprüche 1 bis 5, **dadurch gekennzeichnet, dass** die Verschlussbolzen (40,50) mit Haltemitteln zur Sicherung der Mehrkantmutter in Längsrichtung der Verschlussbolzen (40,50) versehen sind.

7. Rohrkupplung nach Ansprüche 6, **dadurch gekennzeichnet, dass** die Haltemittel als Wulste oder Nocken (57,58) ausgebildet sind.

8. Rohrkupplung nach Ansprüche 7, **dadurch gekennzeichnet, dass** die Wulste oder Nocken (57,58) in einem solchen Abstand zueinander angeordnet sind, dass die Mehrkantmutter (70) mit Spiel gehalten ist.

9. Rohrkupplung nach einem der Ansprüche 1 bis 8, **dadurch gekennzeichnet, dass** die Verschlussbolzen (40,50) wenigstens im Bereich der Durchtrittsöffnungen (51,52) für den Schraubenschaft der Spannschrauben eine im wesentlichen senkrecht zu Achse der Spannschrauben verlaufende Abflachung zur Bildung einer ebenen Auflagefläche (55) für den Schraubenkopf (62) oder die Schraubenmutter (70) aufweisen.

10. Rohrkupplung nach einem der Ansprüche 1 bis 9, **dadurch gekennzeichnet, dass** die Verschlussbolzen (40,50) durch Stanzen und Umformen eines entsprechenden Metallbleches hergestellt sind.

11. Rohrkupplung nach einem der Ansprüche 1 bis 10, **dadurch gekennzeichnet, dass** das Gehäuse (10) eine Dichtungsmanschette (30), z.B. eine Elastomer-Dichtungsmanschette, umschliesst, welche durch Zusammenziehen des Gehäuses (10) in Umfangsrichtung im Durchmesser verengbar ist.

12. Rohrkupplung nach Anspruch 11, **dadurch gekennzeichnet, dass** Mittel zur Sicherung der Verschlussbolzen (40,50) gegen eine unerwünschte Verschiebung in Längsrichtung bei gleichzeitiger Verdrehbarkeit gegenüber den Laschen (12,13) vorgesehen sind.

13. Rohrkupplung nach einem der Ansprüche 1 bis 12, **dadurch gekennzeichnet, dass** zur Gewährleistung einer freien Verdrehbarkeit der Verschlussbolzen (40,50) gegenüber den Laschen (12,13) je eine Ausnehmung (14) für den Schaft (61) der Spannschraube (60) in den Laschen vorgesehen ist.

## Claims

1. Pipe coupling or pipe clamp for connecting or repairing pipes, comprising a substantially cylindrical housing (10), which has a longitudinal gap (11) and whose ends adjacent to the longitudinal gap (11) are in the form of straps (12, 13) for application of force by one locking bolt each, a first and a second locking bolt (40) and (50), respectively, which are supported on the straps (12, 13) and arranged parallel to the longitudinal axis of the housing (10), the locking bolts (40, 50) at least partly having a curvature in cross-section and the curvatures being directed towards one another, and at least one clamping bolt (60) which passes transversely through passages of at least one of the locking bolts (40, 50) and the straps (12, 13) and has a polygonal nut (70) for drawing together the housing in the circumferential direction, the clamping bolt (60) being supported with its head (62) against the first locking bolt (40) and the polygonal nut (70) being supported against the second locking bolt (50) and at least the second locking bolt (40, 50) being in the form of a hollow profile, whereby at least the second locking bolt (50) has rotational driving means for the polygonal nut (70), **characterized in that** the locking bolts (40, 50) are substantially U-shaped in cross-section, whereby the limbs of the locking bolts (40, 50) are parallel to one another at least in the region of the passages (51, 52) for the clamping bolts (60) and have a spacing corresponding to the width-across-flats of the polygonal nut (70).

2. Pipe coupling according to Claim 1, **characterized in that** the two locking bolts (40, 50) are substantially identical.

3. Pipe coupling according to Claim 1 or 2, **characterized in that** the limb ends of the locking bolts (40, 50) are curved or bent over inwards for fixing the polygonal nut (70) in the axial direction of the clamping bolts (60).

4. Pipe coupling according to Claim 1 or 2, **characterized in that** the locking bolts (40, 50) are round or approximately C-shaped in cross-section.

5. Pipe coupling according to Claim 4, **characterized in that** the locking bolts (40, 50) are provided, at least in the region of the passages (51, 52) for the clamping bolts (60), with recesses (53, 54) which form parallel flats corresponding to the width-across-flats of the nut (70).

6. Pipe coupling according to any of Claims 1 to 5, **characterized in that** the locking bolts (40, 50) are provided with retaining means for securing the polygonal nut in the longitudinal direction of the locking bolts (40, 50).

7. Pipe coupling according to Claim 6, **characterized in that** the retaining means are in the form of beads or cams (57, 58).

8. Pipe coupling according to Claim 7, **characterized in that** the beads or cams (57, 58) are arranged a distance apart so that the polygonal nut (70) is held with play.

9. Pipe coupling according to any of Claims 1 to 8, **characterized in that** the locking bolts (40, 50) have, at least in the region of the passages (51, 52) for the bolt shaft of the clamping bolts, a flat section substantially perpendicular to the axis of the clamping bolt and intended for the formation of a flat contact surface (55) for the bolt head (62) or the nut (70).

10. Pipe coupling according to any of Claims 1 to 9, **characterized in that** the locking bolts (40, 50) are produced by punching and working a corresponding metal sheet.

11. Pipe coupling according to any of Claims 1 to 10, **characterized in that** the housing (10) surrounds a sealing collar (30), e.g. an elastomer sealing collar, which can be reduced in diameter by drawing together the housing (10) in the circumferential direction.

12. Pipe coupling according to Claim 11, **characterized in that** means for securing the locking bolts (40, 50) to prevent undesired displacement in the longitudinal direction, with simultaneous rotatability relative to the straps (12, 13), are provided.

13. Pipe coupling according to any of Claims 1 to 12, **characterized in that** one hole (14) for the shaft (61) of the clamping bolt (60) is provided in each of the straps to ensure free rotatability of the locking bolts (40, 50) relative to the straps (12, 13).

## Revendications

1. Raccord de tuyau ou collier de tuyau pour relier ou réparer des tuyaux, avec un boîtier (10) essentiellement cylindrique qui présente une fente longitudinale (11), dont l'extrémité voisine de la fente longitudinale (11) est réalisée sous la forme d'attaches (12, 13) pour l'application d'une force d'un bouchon obturateur respectif, respectivement un premier bouchon obturateur (40) et un deuxième (50) aménagés en appui sur les attaches (12, 13) et parallèles à l'axe longitudinal du boîtier (10), où les bouchons obturateurs (40, 50) présentent au moins partiellement une cambrure lorsque vus en coupe, les cambrures étant dirigées l'une contre l'autre, avec au moins une vis de serrage (60) avec un écrou polygonal (70), laquelle traverse transversalement les bouchons obturateurs (40, 50) et les attaches (12, 13) via des ouvertures de transit pour resserrer le boîtier dans le sens du pourtour, moyennant quoi la vis de serrage (60) prend appui avec sa tête (62) sur le premier bouchon obturateur (40) et l'écrou polygonal (70) prend appui sur le deuxième bouchon obturateur (50), et au moins le deuxième bouchon obturateur (40, 50) se présente sous la forme d'un profil creux, moyennant quoi au moins le deuxième bouchon obturateur (50) présente des moyens pour l'entraînement de l'écrou polygonal (70) **caractérisé en ce que** les bouchons obturateurs (40, 50) sont réalisés essentiellement en forme de U lorsque vus en coupe, moyennant quoi que les branches des bouchons obturateurs (40, 50) présentent au moins dans la zone des ouvertures de transit (51, 52) pour les vis de serrage (60) s'étendant parallèlement l'une par rapport à l'autre, un écart correspondant à l'ouverture de clé de l'écrou polygonal (70).

2. Raccord de tuyau selon la revendication 1, **caractérisé en ce que** les deux bouchons obturateurs (40, 50) sont essentiellement réalisés de la même manière.

3. Raccord de tuyau selon les revendications 1 ou 2, **caractérisé en ce que** les extrémités des branches des bouchons obturateurs (40, 50) sont repliées vers l'intérieur dans le sens axial des vis de serrage (60) ou rompues en pliant pour la fixation de l'écrou polygonal (70).

4. Raccord de tuyau selon les revendications 1 ou 2, **caractérisé en ce que** les bouchons obturateurs (40, 50) sont réalisés essentiellement en forme de C lorsque vus en coupe.

5. Raccord de tuyau selon la revendication 4, **caractérisé en ce que** les bouchons obturateurs (40, 50) sont pourvus d'incrustations (53, 54) pour les vis de serrage (60), au moins dans la zone des ouvertures de transit (51, 52), lesquelles forment des pans parallèles correspondants à l'ouverture de clé de l'écrou (70).

6. Raccord de tuyau selon l'une quelconque des revendications 1 à 5, **caractérisé en ce que** les bouchons obturateurs (40, 50) sont pourvus de moyens de fixation pour bloquer l'écrou polygonal dans le sens longitudinal des bouchons obturateurs (40, 50).

7. Raccord de tuyau selon la revendication 6, **caractérisé en ce que** les moyens de fixation sont réalisés sous la forme de renflements ou ergots (57, 58).

8. Raccord de tuyau selon la revendication 7, **caractérisé en ce que** le renflement ou ergot (57, 58) sont aménagés à une distance telle l'un par rapport à l'autre que l'écrou polygonal (70) est tenu avec du jeu.

9. Raccord de tuyau selon l'une quelconque des revendications 1 à 8, **caractérisé en ce que** les bouchons obturateurs (40, 50) présentent au moins dans la zone des ouvertures de transit (51, 52) pour la tige de vis des vis de serrage, un méplat s'étendant essentiellement verticalement par rapport à l'axe des vis de serrage pour former une surface d'appui (55) plane pour la tête de vis (62) ou l'écrou (70).

10. Raccord de tuyau selon l'une quelconque des revendications 1 à 9, **caractérisé en ce que** les bouchons obturateurs (40, 50) sont fabriqués en découpant à la matrice et en modifiant la forme d'une tôle métallique.

11. Raccord de tuyau selon l'une quelconque des revendications 1 à 10, **caractérisé en ce que** le boîtier (10) entoure une garniture cylindrique (30), par exemple une garniture cylindrique élastomère, pour laquelle le diamètre peut être rétréci en resserrant le boîtier (10) dans le sens du pourtour.

12. Raccord de tuyau selon la revendication 11, **caractérisé en ce que** des moyens sont prévus pour la protection des bouchons obturateurs (40, 50) contre un déplacement longitudinal non souhaité avec une capacité de torsion simultanée par rapport aux attaches (12, 13).

13. Raccord de tuyau selon l'une quelconque des revendications 1 à 12, **caractérisé en ce que** pour garantir une torsion libre des bouchons obturateurs (40, 50) par rapport aux attaches (12, 13), un évidemment (14) respectif est prévu dans les attaches pour la tige (61) de la vis de serrage (60).
